# EUROPEAN PATENT APPLICATION

(11) **EP 4 827 125 A1**
(43) Date of publication of application: **21.10.2026**
(21) Application number: 23961084.3
(22) Date of filing: 12.12.2023
(51) Int. Cl.: H04W 4/30

(54) **COMMUNICATION METHOD, APPARATUS AND DEVICE, AND MEDIUM**

(71) Applicant: GUANGDONG OPPO MOBILE TELECOMMUNICATIONS CORP., LTD., Dongguan, Guangdong 523860 (CN)
(72) Inventor: LU, Fei, Dongguan, Guangdong 523860 (CN); GUO, Yali, Dongguan, Guangdong 523860 (CN); YANG, Haorui, Dongguan, Guangdong 523860 (CN)
(74) Representative: Novagraaf Technologies
(86) International application number: PCT/CN2023/138251
(87) International publication number: WO 2025/123219

(57) **Abstract**

The present application relates to the field of communications, and discloses a communication method, apparatus and device, and a medium. The method is performed by a terminal device, and comprises: receiving first information, the first information being used for instructing the terminal device to perform an inventory service related to an A-IoT device, and/or the first information carrying inventory service information related to the A-IoT device. Inventorying of A-IoT devices is implemented in a remote scenario, the use scenario of the A-IoT devices is widen, and the effect on a traditional communication architecture is small, thereby achieving good forward compatibility.

## Description

### TECHNICAL FIELD

This application relates to the field of communications, and in particular, to a communication method, an apparatus, a device, and or a medium.

### RELATED ART

The communication distance of an ambient power enabled Internet of Things (Ambient IoT/A-IoT) device is relatively short, making it difficult to achieve remote inventory operation, which greatly limits the usage scenarios and inventory efficiency of A-IoT devices.

### SUMMARY

The present disclosure provides a communication method, an apparatus, a device, and a medium. The technical solution at least includes:

According to an aspect of the embodiments of the present disclosure, a communication method is provided, which is performed by a terminal device. The method includes: receiving first information, wherein the first information is used to instruct the terminal device to perform inventory operation related to an A-IoT device, and/or the first information carries inventory operation information related to the A-IoT device.

According to another aspect of the embodiments of the present disclosure, a communication method is provided, which is performed by a network device. The method includes: transmitting first information to a terminal device, wherein the first information is used to instruct the terminal device to perform inventory operation related to an A-IoT device, and/or the first information carries inventory operation information related to the A-IoT device.

According to another aspect of the embodiments of the present disclosure, a communication method is provided, which is performed by a first network element. The method includes: transmitting first information to a terminal device, wherein the first information is used to instruct the terminal device to perform inventory operation related to an A-IoT device, and/or the first information carries inventory operation information related to the A-IoT device.

According to another aspect of the embodiments of the present disclosure, a communication apparatus is provided, which includes: a receiving module, configured to receive first information, wherein the first information is used to instruct this apparatus to perform inventory operation related to an A-IoT device, and/or the first information carries inventory operation information related to the A-IoT device.

According to another aspect of the embodiments of the present disclosure, a communication apparatus is provided, which includes: a transmitting module, configured to transmit first information to a terminal device, wherein the first information is used to instruct the terminal device to perform inventory operation related to an A-IoT device, and/or the first information carries inventory operation information related to the A-IoT device.

According to another aspect of the embodiments of the present disclosure, a communication apparatus is provided, which includes: a transmitting module, configured to transmit first information to a terminal device, wherein the first information is used to instruct the terminal device to perform inventory operation related to an A-IoT device, and/or the first information carries inventory operation information related to the A-IoT device.

According to an aspect of the embodiments of the present disclosure, a terminal device is provided, which includes: a processor; a transceiver connected to the processor; and a memory for storing executable instructions of the processor; wherein the processor is configured to load and execute the executable instructions to perform the communication method as described above.

According to another aspect of the embodiments of the present disclosure, a network device is provided, which includes: a processor; a transceiver connected to the processor; and a memory for storing executable instructions of the processor; wherein the processor is configured to load and execute the executable instructions to perform the communication method as described above.

According to another aspect of the embodiments of the present disclosure, a communication device is provided, which includes: a processor; a transceiver connected to the processor; and a memory for storing executable instructions of the processor; wherein the processor is configured to load and execute the executable instructions to perform the communication method as described above.

According to an aspect of the present disclosure, a computer-readable storage medium is provided, in which executable instructions are stored. The executable instructions are loaded and executed by the processor to perform the communication method as described in the aforementioned aspect.

According to an aspect of the present disclosure, a computer program product is provided, which includes computer instructions stored in a computer-readable storage medium. The computer instructions, when read by a processor of a computer device from the computer-readable storage medium and executed by the processor, cause the computer device to perform the communication method as described in the aforementioned aspects.

According to an aspect of the present disclosure, a chip is provided, which includes a programmable logic circuit and/or program instructions, and the chip is used to perform the communication method as described in the aforementioned aspect when the chip runs.

According to an aspect of the present disclosure, a computer program is provided, which includes computer instructions. The computer instructions, when executed by a processor of a computer device, cause the computer device to perform the communication method as described in the aforementioned aspects.

The technical solution according to the embodiments of the present disclosure may include the following beneficial effects:

Supporting inventory operation through terminal devices, compared to the solution where A-IoT devices communicate directly with network devices to achieve read-write and inventory operation, the introduction of terminal devices helps broaden the communication distance between A-IoT devices and network devices, thereby supporting inventory of A-IoT devices in remote scenarios and expanding the usage scenarios of A-IoT devices. Furthermore, without the need for access network devices to directly communicate with A-IoT devices for inventory, it has minimal impact on traditional communication architectures, reduces the impact on current 3GPP networks, and offers good forward compatibility.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 illustrates a schematic diagram of a communication system according to some embodiments of the present disclosure;
FIG. 2 illustrates the schematic diagram of a network architecture according to some embodiments of the present disclosure;
FIG. 3 illustrates a schematic diagram of a low-power communication system according to some embodiments of the present disclosure;
FIG. 4 illustrates a flow diagram of a communication method according to some embodiments of the present disclosure;
FIG. 5 illustrates the flow diagram of a communication method according to some embodiments of the present disclosure;
FIG. 6 illustrates a flow diagram of a communication method according to some embodiments of the present disclosure;
FIG. 7 illustrates the flow diagram of a communication method according to some embodiments of the present disclosure;
FIG. 8 illustrates the flow diagram of a communication method according to some embodiments of the present disclosure;
FIG. 9 illustrates the flow diagram of a communication method according to some embodiments of the present disclosure;
FIG. 10 illustrates a schematic diagram of a terminal device performing inventory operation according to some embodiments of the present disclosure;
FIG. 11 illustrates a structural block diagram of a communication apparatus according to some embodiments of the present disclosure;
FIG. 12 illustrates a structural block diagram of a communication apparatus according to some embodiments of the present disclosure;
FIG. 13 illustrates a structural block diagram of a communication apparatus according to some embodiments of the present disclosure; and
FIG. 14 illustrates a structural schematic diagram of a communication device according to some embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Here, exemplary embodiments will be described in detail, with examples illustrated in the accompanying drawings. When the following description refers to the drawings, unless otherwise indicated, the same numerals in different drawings represent the same or similar elements. The embodiments described in the following exemplary embodiments do not represent all embodiments consistent with the present disclosure. Instead, they are merely examples of devices and methods consistent with some aspects of the present disclosure as detailed in the appended claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," "third," and the like may be used herein to describe various pieces of information, such information should not be limited to these terms. These terms are only used to distinguish one type of information from another. For example, first information may be referred to as second information, and similarly, second information may be referred to as first information, without departing from the scope of the present disclosure. The word "if," as used herein, may be interpreted as "in a case where," " in a case when," or "in response to determining that," depending on the context.

Firstly, the communication technology involved in the embodiments of the disclosure is introduced.

The technical solutions according to the embodiments of the present disclosure can be applied to various communication systems, such as the global system of mobile communication (GSM) system, the code division multiple access (CDMA) system, the wideband code division multiple access (WCDMA) system, the general packet radio service (GPRS), the long-term evolution (LTE) system, the LTE frequency division duplex (FDD) system, the LTE time division duplex (TDD) system, the advanced long-term evolution (LTE-A) system, the universal mobile telecommunication system (UMTS), the worldwide interoperability for microwave access (WiMAX) communication system, the 5G mobile communication system, the new radio (NR) system, the evolved system of the NR system, the LTE-based access to unlicensed spectrum (LTE-U) system on unlicensed spectrum, the NR-based access to unlicensed spectrum (NR-U) system on unlicensed spectrum, the terrestrial networks (TN) system, the non-terrestrial networks (NTN) system, the wireless local area networks (WLAN), the wireless fidelity (Wi-Fi), the cellular Internet of Things system, the cellular passive Internet of Things system, the ambient power enabled Internet of Things (Ambient IoT/A-IoT) system, and the zero-power Internet of Things system. They can also be applied to the subsequent evolved system of the 5G NR system, as well as to B5G, 6G, and subsequent evolved systems. In some embodiments of the present disclosure, "NR" can also be referred to as the 5G NR system or the 5G system. The 5G mobile communication system can include non-standalone (NSA) networking and/or standalone (SA) networking.

Generally, traditional communication systems support a limited number of connections and are easy to implement. However, with the development of communication technology, mobile communication systems will not only support traditional communication but also support machine type communication (MTC), long-term evolution-machine (LTE-M), device to device (D2D) networks, machine to machine (M2M) networks, Internet of Things (IoT) networks, or other networks. The IoT networks can include, for example, the Internet of Vehicles (IoV). The communication modes in the IoV system are collectively referred to as Vehicle to Everything (V2X), where X can represent anything. For instance, V2X can include Vehicle to Vehicle (V2V) communication, Vehicle to Infrastructure (V2I) communication, Vehicle to Pedestrian (V2P) communication, or Vehicle to Network (V2N) communication.

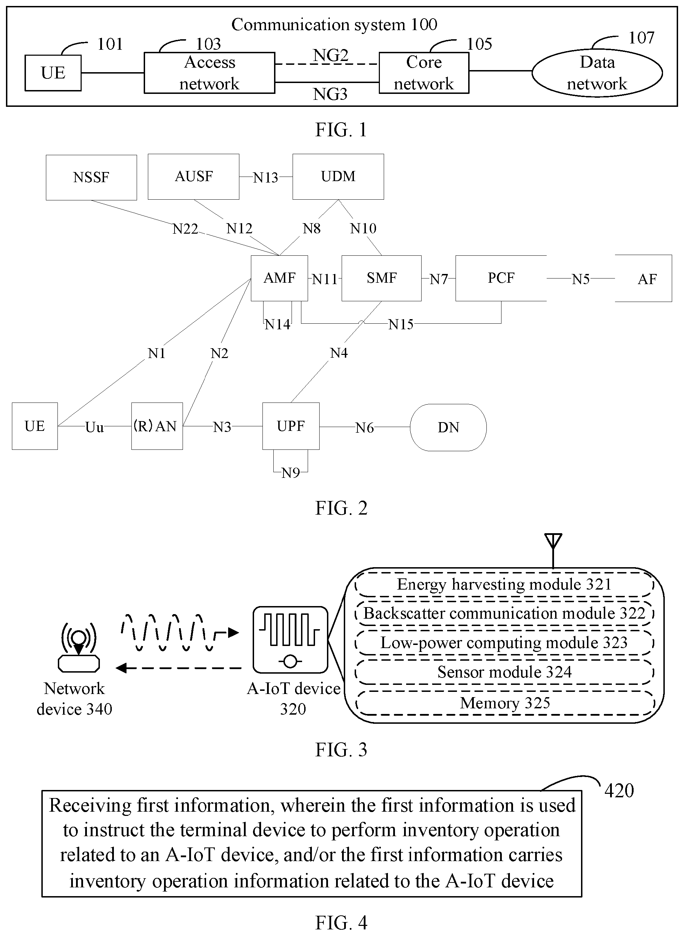

FIG. 1 illustrates the architecture diagram of a communication system 100 according to some exemplary embodiments of the present disclosure. As illustrated in FIG. 1, the communication system 100 may include at least one of: a terminal device 101, an access network 103, a core network (CN) 105, and a data network (DN) 107. The terminal device 101, the access network device 103, and the core network 105 can be logically categorized into two parts: the user plane and the control plane. The control plane is responsible for managing the mobile network, while the user plane is responsible for transmitting operation data.

The terminal device 101 serves as the entry point for mobile users to interact with the network, providing basic computing and storage capabilities, displaying operation windows to users, and accepting user operation inputs. The terminal device 101 establishes signal and data connections with the access network 103 using a certain air interface technology, thereby transmitting control signals and operation data to the mobile network. The terminal device 101 can also be referred to as user equipment (UE), or access terminal, or user unit, or user station, or mobile station, or mobile, or remote station, or remote terminal, or mobile device, or user terminal, or terminal, or wireless communication device, or user agent, or user apparatus. The terminal device 101 can be deployed on land, water, and air, including but not limited to: a handheld device, a wearable device, an in-vehicle device, and an IoT device, such as an electronic tag, a mobile phone, a tablet computer, an e-book reader, a laptop computer, a desktop computer, a television, a game console, a mobile Internet device (MID), an augmented reality (AR) terminal, a virtual reality (VR) terminal, and a mixed reality (MR) terminal, a wearable device, a gamepad, a controller, a wireless terminal in industrial control, a wireless terminal in self-driving, a wireless terminal in remote medical, a wireless terminal in smart grid, a wireless terminal in transportation safety, a wireless terminal in smart city, a wireless terminal in smart home, a wireless terminal in remote medical surgery, a cellular phone, a cordless phone, a Session Initiation Protocol (SIP) phone, a wireless local loop (WLL) station, a personal digital assistant (PDA), a set-top box (STB), a customer premise equipment (CPE), or the like. Typically, there are a plurality of terminal devices 101, with one or more distributed within the cell managed by each access network device 103. In the embodiments of the present disclosure, "terminal device" and "UE" are often used interchangeably, but those skilled in the art can understand their meanings.

The access network is used to implement access-related functions, providing network access for authorized users within the coverage area of a cell, and capable of transmitting user data using transmission tunnels of different qualities based on user levels, operation requirements, or the like. The access network can manage its own resources, utilize them reasonably, and provide access services to the terminal devices 101 as needed, forwarding control signals and user data between the terminal devices 101 and the core network 105. The access network device 103 is a device deployed in the access network to provide wireless communication functions for the terminal device 101, which may include a radio access network (RAN) device and/or an AN device. The RAN devices are primarily wireless network devices in 3GPP networks, while AN devices can be access network devices not defined by 3GPP. In systems employing different radio access technologies, the name of the "access network device" may vary. The access network device 103 includes but is not limited to: an evolved Node B (eNB), a radio network controller (RNC), a node B (NB), a base station controller (BSC), a base transceiver station (BTS), a home base station (e.g., a home evolved node B, or a home node B, HNB), a baseband unit (BBU), an access point (AP) in a wireless fidelity (Wi-Fi) system, a wireless relay node, a wireless backhaul node, a transmission point (TP), or a transmission and reception point (TRP), or the like. The access network device 103 can also be a next-generation Node B (gNB) or transmission point (TRP or TP) in a 5^{th} generation (5G) mobile communication system, or one or a group of antenna panels (including a plurality of antenna panels) for base stations in a 5G system, or a network node constituting a gNB or transmission point, such as a baseband unit (BBU) or distributed unit (DU), or the like, or a base station in a beyond fifth generation (B5G) mobile communication system or a 6^{th} generation (6G) mobile communication system, or a reader/writer in a radio frequency identification (RFID) system. In some embodiments, the access network device can also be referred to as a network device.

The core network 105 is responsible for maintaining subscription data of the mobile network, managing network elements of the mobile network, and providing functions such as session management, mobility management, policy management, and security authentication for the terminal device 101. For example, when the terminal device 101 attaches, it provides network access authentication for the terminal device 101; when the terminal device 101 has an operation request, it allocates network resources to the terminal device 101; when the terminal device 101 moves, it updates network resources for the terminal device 101; when the terminal device 101 is idle, it provides a fast recovery mechanism for the terminal device 101; when the terminal device 101 detaches, it releases network resources for the terminal device 101; when the terminal device 101 has operation data, it provides data routing functions for the terminal device 101, such as forwarding uplink data to the data network 107; or receiving downlink data transmitted to the terminal device 101 from the data network 107 and forwarding the downlink data to the access network 103, thereby transmitting the downlink data to the terminal device 101. The core network 105 can be deployed in a private network or a public network. The network elements deployed in the core network are referred to as core network elements, which can also be regarded as functional entities. One physical device can deploy one or a plurality of core network elements.

The data network 107 is used to provide operation services for users. The data network 107 can be a private network, such as a local area network; or an external network not controlled by the operator, such as the Internet; or a proprietary network jointly deployed by operators, such as the IP multimedia core network subsystem (IMS). The terminal device 101 can access the data network 107 through an established protocol data unit (PDU) session.

Illustratively, two communication scenarios are present in the communication system 100: an uplink communication scenario and a downlink communication scenario. The uplink communication refers to the transmission of signals in the direction of the terminal device 101, the access network device 103, the core network 105, and the data network 107; the downlink communication refers to the transmission of signals in the direction of the data network 107, the core network 105, the access network device 103, and the terminal device 101.

FIG. 2 illustrates the detailed architecture established based on FIG. 1, including UE, (R)AN, core network elements, and DN. Theoretically, this architecture can be categorized into two parts: the user plane and the control plane. The control plane is responsible for managing the mobile network, while the user plane handles the transmission of operation data. In FIG. 2, the NG2 reference point is located between the (R)AN control plane and the core network control plane, the NG3 reference point is located between the (R)AN user plane and the core network user plane, and the NG6 reference point is located between the core network user plane and the data network.

The UE, which belongs to the terminal device 101 illustrated in FIG. 1, serves as the entry point for mobile users to interact with the network. The UE can provide basic computing and storage capabilities, display operation windows to users, and receive user operation inputs. The UE employs air interface technology to establish signal and data connections with the (R)AN, thereby transmitting control signals and operation data to the mobile network.

The (R)AN belongs to the access network device 103 illustrated in FIG. 1. The (R)AN is deployed close to the UE, offering network access functions to authorized users within a specific area. Additionally, the (R)AN has the capability to transmit user data using transmission tunnels of different qualities, depending on the user's level and operation requirements. The (R)AN is capable of managing its own resources, utilizing them efficiently, and providing on-demand access services to the UE. The (R)AN forwards control signals and user data between the UE and the core network.

The user plane of the core network includes the following core network elements: a user plane function (UPF).

The control plane of the core network includes at least one of the following core network elements: an authentication server function (AUSF), an access and mobility management function (AMF), a session management function (SMF), a network slice selection function (NSSF), a network exposure function (NEF), a network repository function (NRF), a unified data management (UDM), a policy control function (PCF), or an application function (AF).

The UPF is responsible for the forwarding and receiving of user data, and also possesses functions related to domain name query. The AMF is primarily responsible for mobility management in the mobile network, such as user location updates, user network registration, and user handover. The SMF is mainly responsible for session management in the mobile network, such as session establishment, modification, and release. The PCF mainly supports the provision of a unified policy framework to control network behavior, provides policy rules to the control layer network functions, and the PCF is also responsible for acquiring user subscription information related to policy decisions. The AUSF is used to perform security authentication of terminals. The NEF is primarily used to support the openness of capabilities and events. The NRF is used to provide storage and selection functions for network function entity information for other network elements. The UDM is used to store user data, such as subscription data, authentication/authorization data, or the like. The AF interacts with the core network to provide application layer services, such as providing routing for application layer data, providing access network capability openness functions, interacting with the policy framework to provide policy control, interacting with IMS, and the like.

In the architecture illustrated in FIG. 2, the N1 interface serves as the reference point between the UE and the AMF; the N2 interface is the reference point between the RAN and the AMF, utilized for the transmission of non-access stratum (NAS) messages, or the like; the N3 interface is the reference point between the RAN and the UPF, used for transmitting user plane data, or the like; the N4 interface is the reference point between the SMF and the UPF, utilized for transmitting information such as tunnel identifier information for N3 connections, data caching indication information, and downlink data notification messages; and the N6 interface is the reference point between the UPF and the DN, used for transmitting user plane data, or the like. The NG interface is the interface between the RAN and the CN.

It should be noted that the interface names between various network elements in FIGS. 1 and 2 are merely examples. In specific implementations, the names of the interfaces may be different, and the embodiments of the present disclosure does not specifically limit them. The names of various network elements (such as SMF, AF, UPF, or the like) in FIGS. 1 and 2 are also merely examples and do not constitute limitations on the functions of the network elements themselves. In networks in related technologies and other future networks, the aforementioned various network elements may also have other names, and the embodiments of the present disclosure does not specifically limit them. For example, in a 6G network, some or all of the aforementioned various network elements may continue to use terminology from 5G, or they may adopt other names, or the like. This is uniformly stated here and will not be further elaborated below. Furthermore, it should be understood that the names of the messages (or signaling) transmitted between the aforementioned various network elements are merely examples and do not constitute any limitations on the functions of the messages themselves.

FIG. 3 illustrates a low-power communication system, which includes an A-IoT device 320 and a network device 340.

The A-IoT device refers to the ambient power enabled Internet of Things (Ambient IoT/A-IoT) device. The A-IoT device can also be referred to as at least one of a passive IoT device, an ultra-low power device, a zero-power device, or a low-power device. The communication technology implemented through the A-IoT device can also be referred to as at least one of an Ambient IoT/A-IoT technology, a passive IoT technology, a zero-power IoT technology, a zero-power communication technology, an ultra-low power communication technology, or a low-power communication technology.

The A-IoT device can harvest energy from the environment (such as radio frequency energy, solar energy, light energy, thermal energy, mechanical energy, kinetic energy, or the like) to acquire energy for communication. Generally, based on the source of energy and the way it is used, low-power devices can be categorized into the following three categories.

(1) Passive devices; the passive devices do not require internal batteries. When a passive device approaches a network device (such as a reader in an RFID system), the passive device falls within the near-field range formed by the antenna radiation of the network device. As a result, the antenna of the passive device generates induced current through electromagnetic induction, which drives the low-power chip circuit of the passive device. This enables demodulation of forward link signals and modulation of backward link signals. For the backscatter link, the passive device can use backscatter or extremely low-power active transmission methods for signal transmission. Passive devices do not require internal batteries to drive either the forward link or the backward link, and thus can be considered as zero-power devices.

In addition to not requiring batteries, the radio frequency (RF) and baseband circuits of passive devices are also very simple, for example, they do not require components such as a LNA, a power amplifier (PA), a crystal oscillator, an analog to digital converter (ADC), or the like. This makes passive devices have many advantages such as small size, light weight, very low price, long service life, and so on.

Passive devices can also support other energy harvesting methods, which harvest energy from the environment (such as solar energy, light energy, thermal energy, kinetic energy, mechanical energy, or the like) to acquire energy to drive the circuit and thus achieve communication. Passive devices can also store some energy through the surrounding environment, but the amount of energy is very small, so the supported functional logic is much less than that of ordinary mobile phone terminals.

The characteristics of passive devices can also include: 1) no battery; 2) energy harvested from the surrounding environment; 3) no universal subscriber identity module (USIM) card.

(2) Semi-passive devices; the semi-passive devices do not have conventional batteries installed within themselves. The semi-passive devices can use radio frequency energy harvesting modules to collect radio wave energy, or use energy harvesting modules to collect energy from the environment (such as solar energy, light energy, thermal energy, kinetic energy, mechanical energy, or the like), and store the harvested energy in an energy storage unit (such as a capacitor). Subsequent to acquiring energy, the energy storage unit can drive the low-power chip circuit of the semi-passive device. It can achieve demodulation of forward link signals and modulation of backward link signals. For the backscatter link, the semi-passive device can use backscatter for signal transmission. The semi-passive device can also have the capability of active transmission, meaning that the backward link can communicate not only through backscatter but also through active transmission.

Semi-passive devices do not require a built-in battery to drive either the forward link or the reverse link. Although they utilize energy stored in capacitors during operation, this energy is derived from radio energy or environmental energy collected by an energy harvesting module. Therefore, semi-passive devices can be considered as a type of zero-power device.

Semi-passive devices inherit many advantages from passive devices, such as small size, light weight, very low price, and long service life.

(3) Active devices; the active devices can have built-in batteries. The battery is used to drive the low-power chip circuit of the active device, enabling demodulation of forward link signals and modulation of backward link signals. The signal transmission of the active device's reverse link can be achieved without consuming the device's own power, through backscattering, thus achieving zero-power consumption. The active device can also have the capability of active transmission, meaning that the backward link can communicate not only through backscattering but also through active transmission.

Although equipped with built-in batteries, these active devices exhibit extremely low power consumption and complexity. Consequently, the battery capacity can be set within a narrow range, leading to reduced costs and dimensions. The built-in battery of the active device can also function as an energy storage unit, storing the environmental energy harvested by the energy harvesting module. This enables the active device to have a longer maintenance cycle, or even become maintenance-free.

In active devices, built-in batteries are used to supply power, extending the communication distance of the active devices, such as increasing the read and write distance of electronic tags, to enhance the reliability of communication. Therefore, active devices are applied in scenarios where there are relatively high requirements for communication distance, reading latency, and other aspects.

In terms of communication methods, low-power devices can support both backscatter and/or active transmission communication methods. Generally, based on the type of transmitter, low-power devices can be categorized into the following three categories:
(1) Low-power devices based on backscatter; these devices use the aforementioned backscatter method for uplink data transmission. These devices do not have active transmitters that transmits signals actively, but only have backscatter transmitters. Therefore, when these devices transmit uplink data, they require network devices to provide a carrier, and they perform backscatter based on the carrier to achieve uplink data transmission.
(2) Low-power devices based on active transmitters; these devices utilize active transmitters with active transmission capabilities for uplink data transmission. Therefore, when transmitting uplink data, these devices can use their own active transmitters to transmit uplink data without requiring network devices to provide carriers. Examples of active transmitters suitable for such devices include an ultra-low-power ASK transmitter and an ultra-low-power FSK transmitter. Based on current implementations, when transmitting a signal of 100 microwatts, the overall power consumption of these transmitters can be reduced to 400 to 600 microwatts.
(3) Low-power devices that possess both the backscatter capabilities and the active transmitters; these devices can support both backscatter and the active transmitters. Depending on various conditions (such as different battery levels, available environmental energy sources), or based on the scheduling of network devices, these devices can determine whether to use backscatter or the active transmitters for active transmission.

Optionally, the A-IoT device 320 includes an energy harvesting module 321. Optionally, the A-IoT device 320 includes a backscatter communication module 322. Optionally, the A-IoT device 320 includes a low-power computing module 323. Optionally, the A-IoT device 320 also includes a sensor module 324. Optionally, the A-IoT device 320 also includes a memory 325. Optionally, the A-IoT device 320 includes one or more of the energy harvesting module 321, the backscatter communication module 322, the low-power computing module 323, the sensor module 324, and the memory 325.

Optionally, the energy harvesting module 321 can harvest energy carried by radio waves in space to power various modules driving the A-IoT device 320. Subsequent to acquiring energy, the A-IoT device 320 can receive signals from the network device 340 or transmit data to the network device 340 through the backscatter communication module 322. The data transmitted by the A-IoT device 320 can be its own stored data (such as identifier or pre-written information, such as the production date, brand, manufacturer, or the like of the commodity). The sensor module 324 can include various sensors, and the A-IoT device 320 can report the data collected by these sensors based on a low-power mechanism. The memory 325 is used to store some basic information (such as item identifiers) or to acquire sensing data such as environmental temperature and humidity.

Optionally, the A-IoT device 320 employs the low-power computing module 323 to perform simple operations such as signal demodulation, decoding or encoding, and modulation. The hardware design can be quite straightforward, resulting in a low cost and compact size for the A-IoT device 320.

It should be understood that the modules in the A-IoT device 320 illustrated in FIG. 3 are merely an example and not a limitation. For instance, the A-IoT device 320 may also include a primary receiver and/or a low-power receiver (also referred to as a secondary receiver).

Taking the previously mentioned A-IoT device 320 as an electronic tag and the network device 340 as a reader/writer as an example. In an RFID system, the reader/writer is a device that reads information from or writes information to electronic tags. When the RFID system operates, the reader/writer transmits radio frequency energy within a certain area to form an electromagnetic field, and the size of the area depends on the transmission power. Electronic tags within the coverage area of the reader/writer are triggered, and the electronic tags transmit the data stored in themselves, or alternatively, the electronic tags modify the data stored in themselves based on the instructions of the reader/writer. The reader/writer performs non-contact bidirectional data communication with the electronic tags through wireless radio frequency, reads and writes to the electronic tags, thereby achieving the purpose of identifying targets and exchanging data. Electronic tags generally consume less power and may not even require a power source or battery. For example, passive electronic tags can receive microwave signals transmitted by the reader/writer and acquire energy through electromagnetic induction coils to temporarily power themselves, thus completing information exchange.

The transmission range of the RFID system is relatively short, and it is applied to local management and communication of items, such as item management or inventory in warehouses, archive management, door card management, and electronic toll collection on highways. The distance between a passive electronic tag and a reader/writer is generally 1 meter, and the distance between an active electronic tag and a reader/writer is only about 100 meters. It is difficult to remotely read, write, or inventory electronic tags, which limits the usage scenarios of electronic tags.

Based on the aforementioned issues, the present disclosure proposes a communication method that facilitates inventory operation by introducing terminal devices. This method aids in the inventory of A-IoT devices in remote scenarios and expands the usage scenarios of A-IoT devices.

FIG. 4 illustrates a flow diagram of a communication method according to some embodiments of the present disclosure. The method is performed by a terminal device, which can be the terminal device 101 illustrated in FIG. 1 or the UE illustrated in FIG. 2. The method includes:
process 420: receiving first information, wherein the first information is used to instruct the terminal device to perform inventory operation related to the A-IoT device, and/or the first information carries inventory operation information related to the A-IoT device.

In the present disclosure, the terminal device performing inventory operation related to the A-IoT device can be understood as the terminal device conducting an inventory of the A-IoT device, or as the terminal device executing inventory operation related to the A-IoT device, or as the terminal device performing an inventory on the A-IoT device. The inventory operation information related to the A-IoT device can be understood as the information required for performing an inventory on the A-IoT device.

In the present disclosure, the inventory operation can also be referred to as one of: inventory service, inventory operation, or inventory action. The inventory operation can be implemented through one or more of the following commands: query, repeated query, acknowledgment (ACK), negative acknowledgement (NACK), read, and write. Illustratively, the inventory operation can be understood as: acquiring identifier information of the A-IoT device and/or acquiring the stored data of the A-IoT device and/or modifying the stored data of the A-IoT device through one or more of the aforementioned commands.

The A-IoT device can be referred to as one of: a passive IoT device, an ultra-low power device, a zero-power device, or a low-power device. In the embodiments of the present disclosure, the A-IoT device can refer to the A-IoT device 320 illustrated in FIG. 3. Illustratively, the A-IoT device includes an electronic tag.

Optionally, the electronic tag consists of a coupling element and a chip, with each tag having a unique electronic identifier. High-capacity electronic tags have user-writable storage space and the high-capacity electronic tags are attached to objects to identify target objects. In the embodiments of the present disclosure, there is no limitation on the type of electronic tag. The electronic tag can be an electronic tag in an RFID system, or the electronic tag can be another type of electronic tag, such as a passive IoT tag or an Ambient IoT tag. Notably, unlike electronic tags in the RFID system, the passive IoT tags or the Ambient IoT tags are novel electronic tags that can also utilize 3GPP network resources for communication.

In some embodiments, the terminal device determines whether to perform an inventory based on the received first information, which can also be understood as the terminal device determines whether to participate in the inventory operation based on the received first information.

In some embodiments, the first information is used to instruct the terminal device to perform the inventory, and the terminal device participates in the inventory operation based on the received first information. In the embodiments of the present disclosure, instructing the terminal device to perform the inventory can also be understood as allowing the terminal device to perform the inventory.

In some embodiments, the first information carries inventory operation information, and the terminal device participates in the inventory operation based on the inventory operation information.

In summary, the method according to the embodiments of the present disclosure supports the implementation of inventory operation through terminal devices. Compared to the solution where A-IoT devices communicate directly with network devices to achieve read-write and inventory operation, the introduction of terminal devices helps broaden the communication distance between A-IoT devices and network devices, thereby supporting the inventory of A-IoT devices in remote scenarios and expanding the usage scenarios of A-IoT devices. Furthermore, without the need for access network devices to directly communicate with A-IoT devices for inventory, it has minimal impact on traditional communication architectures, reduces the impact on current 3GPP networks, and exhibits good forward compatibility.

In some embodiments, the first information is transmitted from the network device to the terminal device, as illustrated in process 540. Optionally, in addition to process 540, the communication method further includes process 520, where the network device receives the first information from the first network element. In the embodiments of the present disclosure, the network device can be the access network device 103 as illustrated in FIG. 1, the (R)AN as illustrated in FIG. 2, the network device 340 as illustrated in FIG. 3, or a reader/writer in the RFID system.

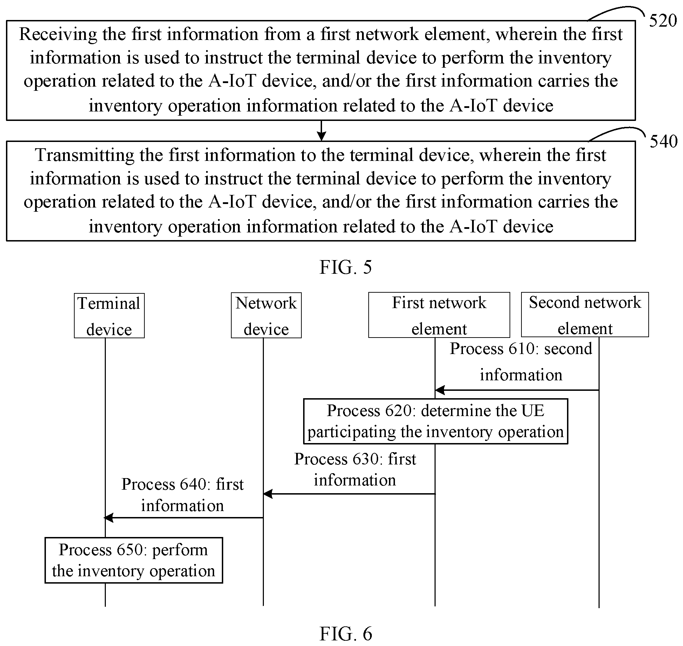

Please refer to FIG. 5, which illustrates a flow diagram of a communication method according to some embodiments of the present disclosure. The method is performed by a network device and includes at least one of the following processes.

Process 520: receiving the first information from a first network element, wherein the first information is used to instruct the terminal device to perform the inventory operation related to the A-IoT device, and/or the first information carries the inventory operation information related to the A-IoT device.

In the embodiment of the present disclosure, instructing the terminal device to perform the inventory can also be understood as allowing the terminal device to perform the inventory.

In some embodiments, the first network element includes an AMF.

Process 540: transmitting the first information to the terminal device, wherein the first information is used to instruct the terminal device to perform the inventory operation related to the A-IoT device, and/or, the first information carries the inventory operation information related to the A-IoT device.

In the present disclosure, the terminal device performs the inventory, that is, the terminal device performs the inventory on the A-IoT device. The A-IoT device can also be referred to as one of: a passive IoT device, an ultra-low power device, a zero power device, or a low power device. The A-IoT device in the embodiments of the present disclosure can refer to the A-IoT device 320 illustrated in FIG. 3. Illustratively, the A-IoT device includes an electronic tag.

Optionally, the electronic tag consists of a coupling element and a chip, with each tag possessing a unique electronic code. High-capacity electronic tags have user-writable storage space and the high-capacity electronic tags are attached to objects to identify target objects. In the embodiments of the present disclosure, there is no limitation on the type of electronic tag. The electronic tag can be an electronic tag in the RFID system, or the electronic tag can be another type of electronic tag, such as a passive IoT tag or an Ambient IoT tag.

In some embodiments, the first information is used to instruct the terminal device to perform the inventory, and the terminal device is supported to participate in the inventory operation based on the received first information.

In some embodiments, the first information carries the inventory operation information, and the terminal device participates in the inventory operation based on the inventory operation information.

In summary, the method according to the embodiments of the present disclosure supports the network device to forward the first information from the first network element to the terminal device, thereby achieving inventory operation through the terminal device. Compared to the solution where the A-IoT device communicates directly with the network device to implement read-write and inventory operation, the introduction of the terminal device helps expand the communication distance between the A-IoT device and the network device, thus supporting the inventory of A-IoT devices in remote scenarios and broadening the usage scenarios of A-IoT devices. Furthermore, without requiring the access network device to directly communicate with the A-IoT device for inventory, it has minimal impact on the traditional communication architecture, reduces the impact on the current 3GPP network, and exhibits good forward compatibility.

FIG. 6 illustrates a flow diagram of a communication method according to some embodiments of the present disclosure. The method is performed by a terminal device, a network device, a first network element, and a second network element, and includes at least one of the following processes.

Process 610: the second network element transmits second information to the first network element.

In some embodiments, the second information is referred to as inventory operation request information.

In some embodiments, the second information is associated with the inventory operation.

In some embodiments, the second information carries a first identifier, wherein the first identifier is associated with the inventory operation. Optionally, the first identifier includes: an area identifier (ID) corresponding to the inventory operation, and/or a UE identifier corresponding to the inventory operation.

The area identifier corresponding to the inventory operation can be used to indicate: the area that the second network element desires to inventory, and/or the area that the second network element requests to inventory. The UE identifier corresponding to the inventory operation can be used to indicate: the UE that the second network element desires to participate in the inventory operation, and/or the UE that the second network element requests to participate in the inventory operation, and/or the UE that the second network element desires to inventory, and/or the UE that the second network element requests to inventory.

In some embodiments, the area identifier includes at least one of a geographic area identifier, a cell identifier, a tracking area identifier, or a radio access network (RAN) domain identifier.

The geographic area identifier can be an absolute geographic area identifier, such as the identifier of a geographic area divided by latitude and longitude. The geographic area identifier can also be a relative geographic area identifier, such as the identifier of a geographic area set relative to a reference point.

In some embodiments, the second network element includes an AF. Illustratively, the AF directly transmits the inventory operation request information to the first network element.

In some embodiments, the second network element includes an NEF. Illustratively, AF first transmits the inventory operation request message to the NEF, and then the NEF forwards the inventory operation request message to the first network element.

Process 620: the first network element determines the UEs participating in the inventory operation.

For ease of explanation, the UE participating in the inventory operation is referred to as the target UE in the embodiments of the present disclosure.

In some embodiments, the first network element determines the target UE based on one or more of: second information, the operation attribute of the inventory operation, and third information. The third information is associated with the terminal device.

In some embodiments, the second information carries the operation attribute of the inventory operation in addition to the first identifier, or the first network element can acquire the operation attribute of the inventory operation based on the second information.

In some embodiments, the operation attribute of the inventory operation includes at least one of the operation provider of the inventory operation, the operation identifier of the inventory operation, or the application identifier (Application ID) of the inventory operation. Optionally, the operation provider of the inventory operation is distinguished by the service identifier (Service ID). Optionally, the operation identifier of the inventory operation is identified by single-network slice selection assistance information (S-NSSAI) and/or a data network name (DNN).

In some embodiments, the third information includes at least one of the following: whether the UE is allowed to perform inventory operation, whether the UE is authorized to perform inventory operation, an inventory area allowed for the UE, inventory time allowed for the UE, inventory operation allowed for the UE, an inventory area authorized for the UE, inventory time authorized for the UE, inventory operation authorized for the UE, an inventory area supported by the UE, inventory time supported by the UE, or inventory operation supported by the UE.

In some embodiments, the first network element determines the target UE based on the second information. Optionally, the second information carries the first identifier, and the first network element determines the target UE based on the first identifier, or the first network element determines the target UE based on the first identifier and the operation attribute of the inventory operation. Illustratively, the first network element determines the target UE based on the area identifier corresponding to the inventory operation and the operation attribute of the inventory operation. Illustratively, the first network element determines the target UE based on the UE identifier corresponding to the inventory operation and the operation attribute of the inventory operation. Illustratively, the first network element determines the target UE based on the UE identifier corresponding to the inventory operation, the area identifier corresponding to the inventory operation, and the operation attribute of the inventory operation.

In some embodiments, the first network element determines the target UE based on the second information and the third information. Optionally, the second information carries the first identifier, and the first network element determines the target UE based on the first identifier and the third information, or the first network element determines the target UE based on the first identifier, the operation attribute of the inventory operation, and the third information.

In some embodiments, the first network element includes an AMF.

Process 630: the first network element transmits the first information to the network device.

In some embodiments, the first network element generates the first information based on at least one of the second information, the operation attribute of the inventory operation, the third information, or the target UE.

The first information is used to instruct the target UE to perform the inventory operation related to the A-IoT device, and/or the first information carries the inventory operation information related to the A-IoT device. The inventory operation information includes one or more of: a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, or a UE identifier corresponding to the inventory operation.

The area identifier corresponding to the inventory operation can be understood as at least one of: the area identifier for performing the inventory operation, the area identifier allowing the inventory operation, the area identifier where the target UE is located, or the area identifier participating in the inventory operation. It can be understood that the first network element allows the inventory operation to occur within the area corresponding to the area identifier, that is, the first network element instructs to perform the inventory operation within the area corresponding to the area identifier.

The time period corresponding to the inventory operation can be understood as at least one of: the time period during which the inventory operation is performed, the time period during which the inventory operation is allowed to be performed, the time period during which the target UE performs the inventory operation, or the time period during which the target UE participates in the inventory operation. It can be understood that the first network element allows the inventory operation to occur within this time period, that is, the first network element instructs to perform the inventory operation within this time period.

The UE identifier corresponding to the inventory operation, that is, the identifier of the UE determined by the first network element to participate in the inventory operation, is also the identifier of the target UE. Optionally, the UE identifier includes at least one of the following identifiers of the UE: a physical identifier, a hardware identifier, an access identifier (Access ID); and an access group identifier (Access Group ID, AG ID).

In some embodiments, the first information is referred to as the inventory operation request information.

In some embodiments, the first network element also transmits the third information to the network device.

Process 640: the network device transmits the first information to the terminal device.

The network device forwards the first information from the first network element to the terminal device. Optionally, the network device can be the access network device 103 illustrated in FIG. 1, the (R)AN illustrated in FIG. 2, the network device 340 illustrated in FIG. 3, or a reader/writer in the RFID system. Optionally, the terminal device can be the terminal device 101 illustrated in FIG. 1 or the UE illustrated in FIG. 2.

In some embodiments, the network device transmits the first information to all terminal devices that have established a connection with it, and the terminal devices that receive the first information determine whether to perform the inventory operation.

In some embodiments, the network device transmits the first information to the target UE, that is, the network device transmits the first information to the UE corresponding to the UE identifier corresponding to the inventory operation.

In some embodiments, the first information is NAS information, or access stratum (AS) information.

In some embodiments, the receiver of the first information is in a radio resource control (RRC) idle state or an RRC inactive state, and the first information is paging information.

In some embodiments, the network device also transmits the third information to the terminal device.

Process 650: the terminal device performs the inventory operation.

The terminal device that receives the first information determines whether to perform the inventory based on the first information, which can also be understood as the terminal device determines whether to participate in the inventory operation based on the received first information.

In some embodiments, the terminal device determines whether to participate in the inventory operation based on the received first information and the third information.

In some embodiments, the first information is used to instruct the terminal device to perform the inventory, and the terminal device participates in the inventory operation based on the received first information. In the embodiments of the present disclosure, instructing the terminal device to perform the inventory can also be understood as allowing the terminal device to perform the inventory.

In some embodiments, the first information carries the inventory operation information, and the terminal device participates in the inventory operation based on the inventory operation information. For example, the terminal device participates in the inventory operation within the area indicated by the area identifier carried in the inventory operation information. For example, the terminal device participates in the inventory operation within the time period carried in the inventory operation information. For example, the terminal device performs the inventory operation corresponding to the service identifier carried in the inventory operation information. For example, the terminal device performs the inventory operation corresponding to the application identifier carried in the inventory operation information. For example, the terminal device performs the inventory operation corresponding to the S-NSSAI carried in the inventory operation information. For example, the terminal device performs the inventory operation corresponding to the DNN carried in the inventory operation information. The above examples can be implemented in combination, such as the terminal device participating in the inventory operation within the area indicated by the area identifier carried in the inventory operation information and within the time period carried in the inventory operation information, or the terminal device performing the inventory operation corresponding to the application identifier within the time period carried in the inventory operation information, or the like, which is not listed here. However, it should be understood that the terminal device can perform the inventory based on one or more pieces of information in the inventory operation information.

In some embodiments, in the case where the first information carries the inventory operation information related to the A-IoT device, and the third information is at least partially identical to the inventory operation information, the inventory operation related to the A-IoT device is performed based on the at least partially identical information. For example, service identifiers carried by the inventory operation information include ID1 and ID2, and service identifiers carried by the third information include ID1 and ID3, the terminal device performs the inventory based on the service identifier ID1.

In some embodiments, in the case where the first information carries the inventory operation information related to the A-IoT device, and no identical information is present between the third information and the inventory operation information, the inventory operation related to the A-IoT device is not performed.

It should be noted that processes 610, 620, 630, and 650 are optional processes.

In summary, the method according to the embodiments of the present disclosure supports the network device to forward the first information from the first network element to the terminal device, thereby achieving inventory operation through the terminal device. Compared to the solution where A-IoT devices communicate directly with network devices to implement read-write and inventory operation, the introduction of terminal devices helps broaden the communication distance between A-IoT devices and network devices, thus supporting inventory of A-IoT devices in remote scenarios and expanding the usage scenarios of A-IoT devices. Furthermore, the terminal device determines whether and how to perform the inventory based on the received first information, which facilitates efficient and accurate execution of the inventory operation and improves the overall efficiency of the communication system. Additionally, there is no need for access network devices to directly communicate with A-IoT devices for inventory, which has minimal impact on traditional communication architectures, reduces the impact on current 3GPP networks, and exhibits good forward compatibility.

As mentioned above, when determining the target UE, the first network element may need to consider the third information, that is, whether the UE is allowed or authorized to perform the inventory, and what kind of inventory operation the UE is allowed or authorized to perform. Additionally, when determining whether to perform the inventory operation, the terminal device also needs to consider whether this terminal device is allowed or authorized to perform the inventory, and what kind of inventory operation this terminal device is allowed or authorized to perform.

In the present disclosure, the third information can be acquired in two ways: (1) via the UDM; (2) via the PCF. The present disclosure provides a practical and feasible acquisition scheme for the third information, and also enhances the flexibility of acquiring the third information.

### Method (1): Acquire via the UDM

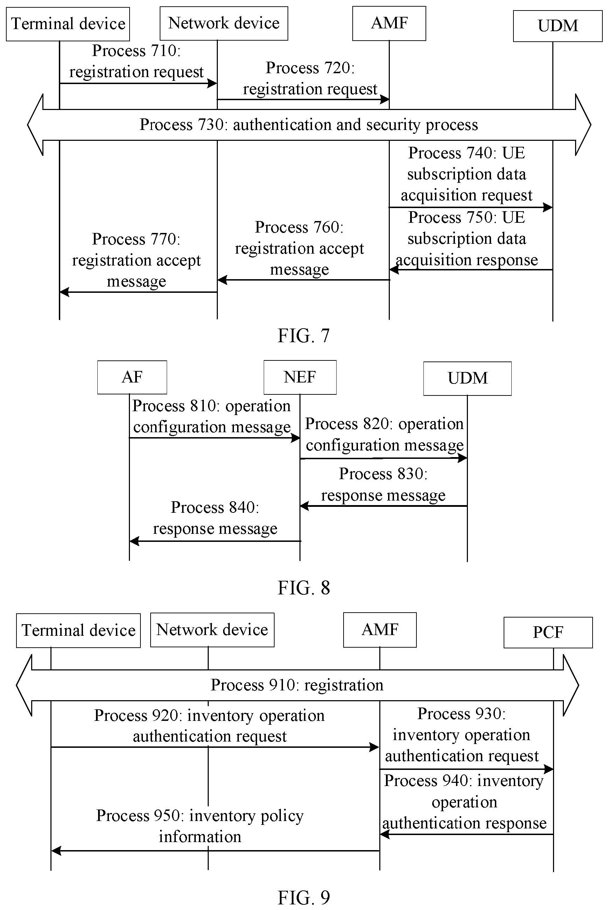

In some embodiments, the third information mentioned in the embodiments illustrated in FIG. 6 is acquired through the registration process of the UE, and the third information can be implemented as UE subscription data. That is, information about whether the terminal device is allowed or authorized to perform the inventory, and what kind of inventory operation is allowed or authorized, can be acquired through the registration process of the UE. This registration process can refer to FIG. 7.

FIG. 7 illustrates a flow diagram of a communication method according to some embodiments of the present disclosure. The method is performed by a terminal device, a network device, a first network element, and a third network element. The method includes at least one of the following processes.

Process 710: the terminal device transmits a registration request to the network device.

In some embodiments, the UE can transmit an AN message to the RAN, wherein the AN message carries a registration request. The AN message can also include an AN parameter, wherein the AN parameter can be used by the RAN for AMF selection. The registration request can include at least one of: a registration type, UE identifier information, requested network slice information, UE-supported inventory operation, UE-desired inventory operation, or the inventory request. The requested network slice information includes, for example, the requested NSSAI.

Process 720: the network device transmits the registration request to the AMF.

In the embodiment of the present disclosure, the schematic illustration is given by taking the first network element including the AMF as an example.

In some embodiments, the RAN can select an appropriate AMF for the UE based on the AN message and transmit the UE's registration request to that AMF.

Process 730: authentication and security process is performed.

UE interacts with the AMF and the UDM to complete the authentication and security process. For the detailed interaction process of the authentication and security process, please refer to the descriptions in relevant technologies. The present disclosure will not elaborate further.

It can be understood that process 730 is an optional process.

Process 740: The AMF transmits a UE subscription data acquisition request to the UDM.

In the embodiment of the present disclosure, the third network element including the UDM is taken as an example for illustrative explanation.

The UE subscription data in the embodiments of the present disclosure belongs to the third information.

Process 750: the UDM transmits a UE subscription data acquisition response to the AMF.

The AMF interacts with the UDM to acquire the UE subscription data.

Optionally, the UE subscription data includes at least one of the following information: whether the UE is allowed to perform inventory operation, whether the UE supports performing inventory operation, the operation provider of inventory operation allowed by the UE, the operation identifier of inventory operation allowed by the UE, the application identifier of inventory operation allowed by the UE, the operation provider of inventory operation supported by the UE, the operation identifier of inventory operation supported by the UE, the application identifier of inventory operation supported by the UE, the default operation provider of inventory operation, the default operation identifier of inventory operation, the default application identifier of inventory operation, the operation provider of inventory operation that needs to be performed, the operation identifier of inventory operation that needs to be performed, the application identifier of inventory operation that needs to be performed, the time allowed for performing inventory operation, the area allowed for performing inventory operation, the default time for performing inventory operation, the default area for performing inventory operation, the time supported for performing inventory operation, and the area supported for performing inventory operation. Optionally, the operation provider of inventory operation is distinguished by the service identifier.

Optionally, the operation identifier of the inventory operation is identified through S-NSSAI and/or a DNN. Optionally, the area where the inventory operation is performed is distinguished by the area identifier. For details on the area identifier, please refer to process 610, which will not be elaborated here.

Optionally, the subscription data also includes at least one of the following information: the UE's subscribed NSSAI, the default NSSAI, and the S-NSSAIs subject to network slice-specific authentication and authorization).

It should be noted that processes 740 and 750 are optional processes, meaning that the AMF can acquire the UE subscription data without interacting with the UDM. For example, the AMF can acquire the UE subscription data from the database of the operation provider.

Process 760: the AMF transmits a registration accept message to the network device.

In some embodiments, the registration accept message is generated based on the UE subscription data, and/or the registration accept message includes the UE subscription data.

In some embodiments, the AMF transmits the registration accept message to the RAN. The registration accept message includes at least one of the following information: whether the UE is allowed to perform inventory operation, whether the UE is authorized to perform inventory operation, an allowed operation provider, an allowed operation identifier, an allowed application identifier, an authorized operation provider, an authorized operation identifier, an authorized application identifier, time allowed for performing inventory operation, an area allowed for performing inventory operation, time authorized for performing inventory operation, and an area authorized for performing inventory operation.

In some embodiments, the inventory operation only occurs during the time period when it is allowed or authorized to perform the inventory operation. It can be understood that subsequent to exceeding the time period allowed or authorized for the inventory operation, the UE does not perform the inventory operation; alternatively, it can be understood that subsequent to exceeding the time period allowed or authorized for the inventory operation, the inventory function of the UE becomes invalid.

In some embodiments, the inventory operation only occurs within the area where the inventory operation is allowed or authorized. This can be understood as meaning that once the UE moves beyond the area where the inventory operation is allowed or authorized, the UE will not perform the inventory operation; alternatively, it can be understood as meaning that once the UE moves beyond the area where the inventory operation is allowed or authorized, the inventory function of the UE becomes invalid.

Process 770: the network device transmits the registration accept message to the terminal device.

In some embodiments, the RAN forwards the registration accept message from the AMF to the UE. Optionally, the RAN forwards the registration accept message to the UE via an RRC message.

Optionally, the terminal device returns a registration completion message to the network device. Optionally, the network device forwards the registration completion message to the AMF.

In summary, the method according to the embodiments of the present disclosure supports the terminal device to initiate the registration process to acquire the third information, laying the foundation for subsequent decisions on whether and how to perform the inventory operation. This facilitates improving the efficiency and accuracy of the first network element (such as AMF) in generating the first information, and aids the terminal device in enhancing its efficiency and accuracy in determining whether and how to perform the inventory operation, thereby improving the execution efficiency and accuracy of the inventory operation.

In processes 740 and 750, the AMF acquires the UE subscription data through interaction with the UDM. So, how does the UDM acquire the UE subscription data? Please refer to FIG. 8 for the specific process.

FIG. 8 illustrates a flowchart of a communication method according to some embodiments of the present disclosure, which is performed by the AF, the NEF, and the UDM. The method includes at least one of the following processes.

Process 810: the AF transmits an operation configuration message to the NEF.

In some embodiments, the operation configuration message includes UE subscription data. For details regarding the UE subscription data, please refer to process 750, which will not be elaborated here.

Process 820: the NEF transmits the operation configuration message to the UDM.

In some embodiments, the NEF forwards the operation configuration message from the AF to the UDM.

Process 830: the UDM transmits a response message to the NEF.

In some embodiments, the UDM transmits the response message to the NEF to indicate that the operation configuration message has been successfully received. As an example, the response message includes an acknowledgment (ACK).

In some embodiments, the UDM transmits the response message to the NEF to indicate that the operation configuration message was not successfully received or that the reception of the operation configuration message failed. Illustratively, the response message includes a negative acknowledgement (NACK).

Process 840: the NEF transmits the response message to the AF.

In some embodiments, the NEF forwards the response message from the UDM to the AF. Illustratively, the response message includes the ACK or the NACK.

In summary, the method according to the embodiments of the present disclosure supports the UDM acquiring the UE subscription data through the AF and the NEF, laying the foundation for subsequent decisions on whether and how to perform the inventory operation. This facilitates improving the efficiency and accuracy of the first network element (such as AMF) in generating the first information, and aids terminal devices in enhancing the efficiency and accuracy of determining whether and how to perform the inventory operation, thereby improving the execution efficiency and accuracy of the inventory operation.

### Method (2): Acquire via the PCF

In some embodiments, the third information mentioned in the embodiments illustrated in FIG. 6 can be acquired through an inventory policy message. That is, information about whether the terminal device is allowed or authorized to perform the inventory, and what kind of inventory operation is allowed or authorized, can be acquired through the interaction between the AMF and the PCF. Please refer to FIG. 9 for the specific process.

FIG. 9 illustrates a flow diagram of a communication method according to some embodiments of the present disclosure. The method is performed by a terminal device, a network device, a first network element, and a fourth network element, and includes at least one of the following processes.

Process 910: the UE registers to the network.

The registration process of UE can refer to the descriptions in relevant technologies, or one or more of the above processes 710, 720, 730, 760, and 770. It will not be elaborated here.

Process 920: the UE transmits an inventory operation authorization request to the AMF.

In the embodiments of the present disclosure, an illustrative example is provided using the first network element including the AMF.

In some embodiments, the UE transmits the inventory operation authorization request to the AMF via the N1 interface. Alternatively, the UE transmits the inventory operation authorization request to the RAN, and the RAN forwards the inventory operation authorization request to the AMF via the N2 interface.

Process 930: the AMF transmits the inventory operation authorization request to the PCF.

In the embodiments of the present disclosure, the fourth network element, including the PCF, is taken as an example for illustrative explanation.

In some embodiments, the AMF forwards the received inventory operation authorization request to the PCF.

Process 940: the PCF transmits an inventory operation authorization response to the AMF.

Optionally, the PCF transmits a response message to the AMF to indicate authorization for the inventory operation. Illustratively, the response message includes the ACK. Optionally, the PCF transmits a response message to the AMF to indicate non-authorization for the inventory operation. Illustratively, the response message includes the NACK.

Optionally, the response message transmitted by the PCF to the AMF includes the third information.

Process 950: the AMF transmits inventory policy information to the UE.

In some embodiments, the AMF transmits the inventory policy information to the UE via the N1 interface. Alternatively, the AMF transmits the inventory policy information to the RAN, and the RAN forwards the inventory policy information to the UE.

The inventory policy information in the embodiments of the present disclosure belongs to the third information.

In some embodiments, the inventory policy information includes at least one of the following information: whether the UE is allowed to perform inventory operation, whether the UE is authorized to perform inventory operation, an allowed operation provider, an allowed operation identifier, an allowed application identifier, an authorized operation provider, an authorized operation identifier, an authorized application identifier, time allowed for performing inventory operation, an area allowed for performing inventory operation, time authorized for performing inventory operation, and an area authorized for performing inventory operation.

In some embodiments, the inventory operation only occurs during the time period allowed or authorized for inventory operation. This can be understood as meaning that subsequent to exceeding the time period allowed or authorized for inventory operation, the UE does not perform the inventory operation; it can also be understood as meaning that subsequent to exceeding the time period allowed or authorized for inventory operation, the inventory function of the UE becomes invalid.

In some embodiments, inventory operation only occurs within the area where inventory operation is allowed or authorized. This can be understood as meaning that beyond the area where inventory operation is allowed or authorized, the UE does not perform the inventory operation; alternatively, it can be understood as meaning that beyond the area where the inventory operation is allowed or authorized, the inventory function of the UE becomes invalid.

In summary, the method according to the embodiments of the present disclosure supports the acquisition of third information via the PCF, laying the foundation for subsequent decisions on whether and how to perform the inventory operation. This facilitates improving the efficiency and accuracy of the first network element (such as AMF) in generating the first information, and enhances the efficiency and accuracy of the terminal device in determining whether and how to perform the inventory operation, thereby improving the execution efficiency and accuracy of the inventory operation.

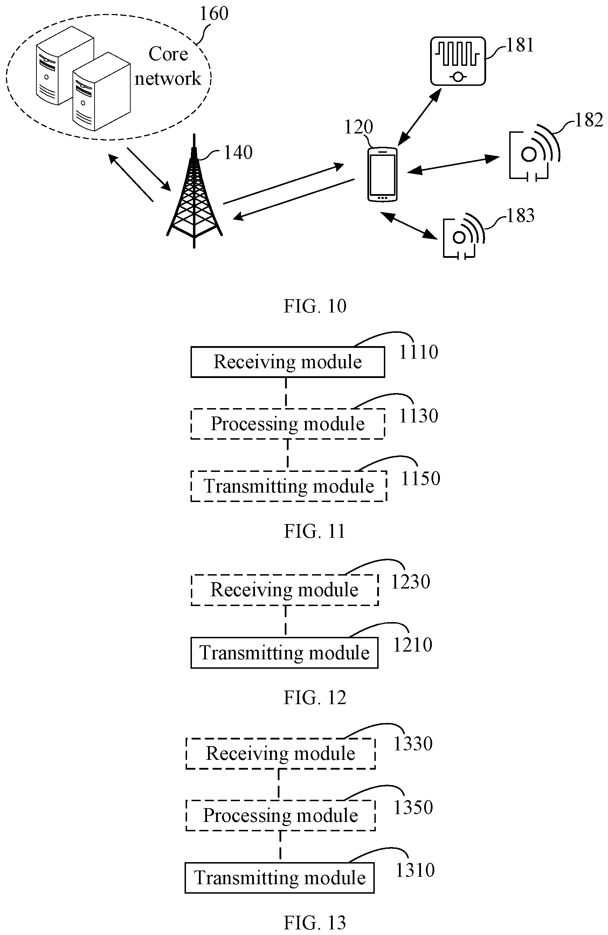

FIG. 10 illustrates a schematic diagram of a terminal device performing the inventory operation, as provided in an exemplary embodiment of the present disclosure.

The UE 120 initiates a registration process to the access network device 140, and the UE 120 completes the registration to the core network 160.

The core network 160 transmits the first information to UE 120 via the access network device 140. The first information is used to instruct the UE 120 to perform the inventory operation, and/or the first information carries the inventory operation information. The first information is generated by the AMF based on the UE participating in the inventory operation and/or the third information. The third information is acquired by the AMF from the UDM, or from the PCF, or from the database of the operation provider.

The UE 120 performs the inventory operation based on the first information, and inventories A-IoT devices 181, 182, and 183. The inventory results are fed back to the access network device 140, which can also forward the inventory results to the core network 160.

Since there is no need for the access network device 140 to directly control the A-IoT devices 181, 182, and 183, but rather for the UE 120 to participate in the inventory operation as an intermediate node, the communication distance between the access network device 140 and the A-IoT devices is no longer limited. The access network device 140 can remotely control the UE 120 via the Uu interface to perform the inventory operation, achieving remote inventory of the A-IoT devices. Furthermore, there is no need for the access network device 140 to directly communicate with the A-IoT devices, nor is there a need to redesign or update the traditional communication structure. The access network device 140 and the core network 160 can communicate with the UE 120 through the traditional communication architecture, with minimal impact on the traditional communication architecture and reduced impact on the current 3GPP network, providing good forward compatibility.

It should be understood that in the description of the embodiments of the present disclosure, the term "correspond" indicates a direct or indirect corresponding relationship between two items, or indicates an associated relationship between two items; and also indicates relationships such as indicating and being indicated, or configuring and being configured.

In the embodiments of the present disclosure, "agreement" can be implemented by prestoring corresponding codes, tables, or other means that can be used to indicate relevant information in communication devices (such as terminal devices, network devices). The specific implementation method is not limited in the present disclosure. Communication protocol agreement can also be understood as predefined in the communication protocol.

FIG. 11 illustrates a structural block diagram of a communication apparatus according to some embodiments of the present disclosure. The apparatus can be implemented as a terminal device or as a part of a terminal device, and the terminal device can be implemented as one or more of the terminal devices illustrated in FIGS. 1, 2, 4, 6, 7, 9, and 10. The apparatus includes a receiving module 1110. Optionally, the apparatus also includes at least some of a processing module 1130 and a transmitting module 1150.

The receiving module 1110 is configured to receive first information, wherein the first information is used to instruct the apparatus to perform inventory operation related to an A-IoT device, and/or the first information carries inventory operation information related to the A-IoT device.

In some embodiments, the first information is generated based on at least one of second information, an operation attribute of the inventory operation, or third information; wherein the second information is associated with the inventory operation, and the third information is associated with the apparatus.

In some embodiments, the second information carries a first identifier, wherein the first identifier includes: an area identifier corresponding to the inventory operation, and/or a UE identifier corresponding to the inventory operation.

In some embodiments, the third information includes at least one of: whether the terminal device is allowed to perform inventory operation, whether the terminal device is authorized to perform inventory operation, an inventory area allowed for the terminal device, inventory time allowed for the terminal device, inventory operation allowed for the terminal device, an inventory area authorized for the terminal device, inventory time authorized for the terminal device, inventory operation authorized for the terminal device, an inventory area supported by the terminal device, inventory time supported by the terminal device, or inventory operation supported by the terminal device.

In some embodiments, the first information is generated by a first network element; the second information is transmitted to the first network element by a second network element, and/or the third information is transmitted to the first network element by a third network element.

In some embodiments, the second network element includes an AF or an NEF.

In some embodiments, the third network element includes a UDM or a PCF.

In some embodiments, the third network element includes the UDM, and the third information is carried in a subscription data acquisition response.

In some embodiments, the third network element includes the PCF, and the third information is carried in an inventory operation authorization response.

In some embodiments, the first network element includes an AMF.

In some embodiments, the operation attribute of the inventory operation includes at least one of: an operation provider of the inventory operation, an operation identifier of the inventory operation, or an application identifier of the inventory operation.

In some embodiments, the operation attribute of the inventory operation is identified by at least one of: a service identifier, S-NSSAI, a DNN, or an application identifier.

In some embodiments, the inventory operation information includes one or more of the following information: a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, and a UE identifier corresponding to the inventory operation.

In some embodiments, the apparatus further includes a processing module 1130, configured to determine whether to perform the inventory operation related to the A-IoT device based on the first information.

In some embodiments, the processing module 1130 is configured to perform the inventory operation related to the A-IoT device in the case where the first information is used to instruct the terminal device to perform the inventory operation related to the A-IoT device.

In some embodiments, the processing module 1130 is configured to perform, in the case where the first information carries the inventory operation information related to the A-IoT device and the third information is at least partially identical to the inventory operation information, the inventory operation related to the A-IoT device based on the at least partially identical information.

In some embodiments, the processing module 1130 is configured to refrain from performing the inventory operation related to the A-IoT device in the case where the first information carries the inventory operation information related to the A-IoT device and no identical information is present between the third information and the inventory operation information.

In some embodiments, the first information is carried by at least one of a NAS message, an AS message, or a paging message.

In some embodiments, the receiving module 1110 is configured to receive at least one of a registration accept message, the third information, or inventory policy information.

In some embodiments, the receiving module 1110 is configured to perform one or more of process 420, process 730, and process 910.

In some embodiments, the processing module 1130 is configured to perform process 650.

In some embodiments, the apparatus further includes a transmitting module 1150 configured to transmit signals and/or data to the network device.

In some embodiments, the transmitting module 1150 is configured to transmit signals and/or data to the first network element.

In some embodiments, the transmitting module 1150 is configured to transmit at least one of a registration request or an inventory operation authorization request.

In some embodiments, the transmitting module 1150 is configured to perform one or more of process 710, process 730, process 910, and process 920.

In summary, the apparatus according to the embodiments of the present disclosure supports inventory operation through terminal devices. Compared to the solution where A-IoT devices communicate directly with network devices to achieve read-write and inventory operation, the introduction of terminal devices helps expand the communication distance between A-IoT devices and network devices, thereby supporting inventory of A-IoT devices in remote scenarios and broadening the usage scenarios of A-IoT devices. Furthermore, without the need for access network devices to communicate directly with A-IoT devices for inventory, it has minimal impact on traditional communication architectures, reduces the impact on current 3GPP networks, and exhibits good forward compatibility.

FIG. 12 illustrates a structural block diagram of a communication apparatus according to some embodiments of the present disclosure. The apparatus can be implemented as a network device or as a part of a network device, and the network device can be implemented as one or more of the network devices illustrated in FIGS. 1, 2, 3, 5, 6, 7, 9, and 10. The apparatus includes a transmitting module 1210. Optionally, the apparatus also includes a receiving module 1230.

The transmitting module 1210 is configured to transmit first information to a terminal device, wherein the first information is used to instruct the terminal device to perform inventory operation related to an ambient power enabled Internet of Things (A-IoT) device, and/or the first information carries inventory operation information related to the A-IoT device.

In some embodiments, the first information is generated based on at least one of second information, an operation attribute of the inventory operation, or third information; wherein the second information is associated with the inventory operation, and the third information is associated with the apparatus.

In some embodiments, the second information carries a first identifier, wherein the first identifier includes: an area identifier corresponding to the inventory operation, and/or a UE identifier corresponding to the inventory operation.

In some embodiments, the third information includes at least one of: whether the terminal device is allowed to perform inventory operation, whether the terminal device is authorized to perform inventory operation, an inventory area allowed for the terminal device, inventory time allowed for the terminal device, inventory operation allowed for the terminal device, an inventory area authorized for the terminal device, inventory time authorized for the terminal device, inventory operation authorized for the terminal device, an inventory area supported by the terminal device, inventory time supported by the terminal device, or inventory operation supported by the terminal device.

In some embodiments, the first information is generated by a first network element; the second information is transmitted to the first network element by a second network element, and/or the third information is transmitted to the first network element by a third network element.

In some embodiments, the second network element includes an AF or an NEF.

In some embodiments, the third network element includes a UDM or a PCF.

In some embodiments, the third network element includes the UDM, and the third information is carried in a subscription data acquisition response.

In some embodiments, the third network element includes the PCF, and the third information is carried in an inventory operation authorization response.

In some embodiments, the first network element includes an AMF.

In some embodiments, the operation attribute of the inventory operation includes at least one of an operation provider of the inventory operation, an operation identifier of the inventory operation, or an application identifier of the inventory operation.

In some embodiments, the operation attribute of the inventory operation is identified by at least one of: a service identifier, S-NSSAI, a DNN, or an application identifier.

In some embodiments, the inventory operation information includes one or more of the following information: a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, or a UE identifier corresponding to the inventory operation.

In some embodiments, the apparatus further includes a receiving module 1230 configured to receive the first information from the first network element.

In some embodiments, the first information is carried by at least one of a NAS message, an AS message, or a paging message.

In some embodiments, the transmitting module 1210 is further configured to transmit signals and/or data to the first network element.

In some embodiments, the transmitting module 1210 is configured to transmit at least one of first information, a registration request, a registration accept message, an inventory operation authorization request, or third information.

In some embodiments, the transmitting module 1210 is configured to perform one or more of process 540, process 640, process 720, and process 770.

In some embodiments, the receiving module 1230 is configured to receive at least one of first information, a registration request, a registration accept message, an inventory operation authorization request, inventory policy information, or third information.

In some embodiments, the receiving module 1230 is configured to perform process 520.

In summary, the apparatus according to the embodiments of the present disclosure supports forwarding the first information from the first network element to the terminal device, thereby enabling inventory operation through the terminal device. Compared to the solution where the A-IoT device directly communicates with the present device to implement read-write and inventory operation, the introduction of the terminal device helps broaden the communication distance between the A-IoT device and this apparatus, thus supporting inventory of the A-IoT device in remote scenarios and expanding the usage scenarios of the A-IoT device. Furthermore, the terminal device determines whether and how to perform the inventory based on the received first information, which helps to efficiently and accurately perform inventory operation and improve the overall efficiency of the communication system. Additionally, there is no need for this apparatus to directly communicate with the A-IoT device for inventory, which has minimal impact on the traditional communication architecture, reduces the impact on the current 3GPP network, and exhibits good forward compatibility.

FIG. 13 illustrates a structural block diagram of a communication apparatus according to some embodiments of the present disclosure, which can be implemented as a first network element or as a part of a first network element. The apparatus includes a transmitting module 1310. Optionally, the apparatus further includes at least some of a receiving module 1330 and a processing module 1350.

The transmitting module 1310 is configured to transmit first information to a network device, wherein the first information is used to instruct a terminal device to perform inventory operation related to an ambient power enabled Internet of Things (A-IoT) device, and/or the first information carries inventory operation information related to the A-IoT device.

In some embodiments, the first information is generated based on at least one of second information, an operation attribute of the inventory operation, or third information; wherein the second information is associated with the inventory operation, and the third information is associated with the terminal device.

In some embodiments, the second information carries a first identifier, wherein the first identifier includes: an area identifier corresponding to the inventory operation, and/or a UE identifier corresponding to the inventory operation.

In some embodiments, the third information includes at least one of: whether the terminal device is allowed to perform inventory operation, whether the terminal device is authorized to perform inventory operation, an inventory area allowed for the terminal device, inventory time allowed for the terminal device, inventory operation allowed for the terminal device, an inventory area authorized for the terminal device, inventory time authorized for the terminal device, inventory operation authorized for the terminal device, an inventory area supported by the terminal device, inventory time supported by the terminal device, or inventory operation supported by the terminal device.

In some embodiments, the apparatus further includes a receiving module 1330, configured to receive the second information from a second network element, and/or configured to receive the third information from a third network element.

In some embodiments, the apparatus further includes a processing module 1350 configured to generate the first information.

In some embodiments, the second network element includes an AF or an NEF.

In some embodiments, the third network element includes a UDM or a PCF.

In some embodiments, the third network element includes the UDM, and the third information is carried in a subscription data acquisition response.

In some embodiments, the transmitting module 1310 is configured to transmit a subscription data acquisition request to the third network element.

In some embodiments, the third network element includes the PCF, and the third information is carried in an inventory operation authorization response.

In some embodiments, the transmitting module 1310 is configured to transmit an inventory operation authorization request to the third network element.

In some embodiments, the operation attribute of the inventory operation includes at least one of: the operation provider of the inventory operation, the operation identifier of the inventory operation, or the application identifier of the inventory operation.

In some embodiments, the operation attribute of the inventory operation is identified by at least one of: a service identifier, S-NSSAI, a DNN, or an application identifier.

In some embodiments, the inventory operation information includes one or more of the following information: a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, or a UE identifier corresponding to the inventory operation.

In some embodiments, the receiving module 1110 is configured to receive at least one of: a UE subscription data acquisition response, an inventory operation authorization request, an inventory operation authorization response, or the third information.

In some embodiments, the processing module 1350 is configured to perform process 620.

In some embodiments, the transmitting module 1310 is configured to transmit signals and/or data to the network device.

In some embodiments, the transmitting module 1310 is configured to transmit signals and/or data to the terminal device.

In some embodiments, the transmitting module 1310 is configured to transmit signals and/or data to a second network element, a third network element, and a fourth network element.

In some embodiments, the transmitting module 1310 is configured to transmit at least one of: first information, a UE subscription data acquisition request, a registration accept message, an inventory operation authorization request, inventory policy information, or third information.

In some embodiments, the transmitting module 1310 is configured to perform one or more of process 630, process 740, process 760, process 930, and process 950.

In summary, the apparatus according to the embodiments of the present disclosure supports transmitting first information to the network device, thereby enabling the terminal device to perform the inventory operation. Compared to the solution where A-IoT devices communicate directly with the network device to achieve read-write and inventory operation, the introduction of terminal device helps broaden the communication distance between A-IoT devices and network device, thus supporting inventory of A-IoT devices in remote scenarios and expanding the usage scenarios of A-IoT devices. Furthermore, without requiring access network devices to communicate directly with A-IoT devices for inventory, it has minimal impact on traditional communication architectures, reduces the impact on current 3GPP networks, and exhibits good forward compatibility.

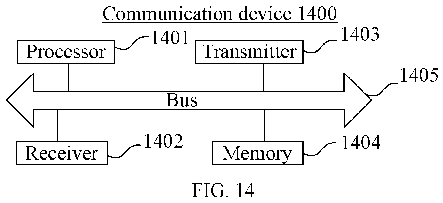

FIG. 14 illustrates a structural schematic diagram of a communication device 1400 according to some embodiments of the present disclosure, including: a processor 1401, a receiver 1402, a transmitter 1403, a memory 1404, and a bus 1405. The communication device 1400 can be used to perform some or all of the processes performed by the terminal device described above, can also be used to perform some or all of the processes performed by the network device described above, and can also be used to perform some or all of the processes performed by each network element described above.

The processor 1401 includes one or more processing cores, and by executing software programs and modules, the processor 1401 performs various functional applications and information processing. In some embodiments, the processor 1401 can be configured to implement the functions and processes of the aforementioned processing module 1130 and/or processing module 1350.

The receiver 1402 and the transmitter 1403 can be implemented as a communication assembly, which can be a communication chip, and this communication assembly can be referred to as a transceiver. In some embodiments, the receiver 1402 can be used to implement the functions and processes of the aforementioned receiving module 1110 and/or receiving module 1230 and/or receiving module 1330, and the transmitter 1403 can be used to implement the functions and processes of the aforementioned transmitting module 1150 and/or transmitting module 1210 and/or transmitting module 1310.

The memory 1404 is connected to the processor 1401 via the bus 1405.

The memory 1404 can be used to store at least one instruction, and the processor 1401 is used to execute the at least one instruction, so as to perform each process in the above method embodiments.

In addition, the memory 1404 can be implemented by any type of volatile or non-volatile storage device, or a combination thereof. Volatile or non-volatile storage devices include, but are not limited to: a magnetic or optical disk, an electrically-erasable programmable read only memory (EEPROM), an erasable programmable read only memory (EPROM), a static random access memory (SRAM), a read-only memory (ROM), a magnetic storage, a flash memory, and a programmable read-only memory (PROM).

In some embodiments, the receiver 1402 independently performs signal/data reception, or the processor 1401 controls the receiver 1402 to perform signal/data reception, or the processor 1401 requests the receiver 1402 to perform signal/data reception, or the processor 1401 cooperates with the receiver 1402 to perform signal/data reception.

In some embodiments, the transmitter 1403 transmits signals/data independently, or the processor 1401 controls the transmitter 1403 to transmit signals/data, or the processor 1401 requests the transmitter 1403 to transmit signals/data, or the processor 1401 cooperates with the transmitter 1403 to transmit signals/data.

In an exemplary embodiment of the present disclosure, a computer-readable storage medium is also provided, in which at least one program is stored. The at least one program is loaded and executed by the processor to perform the communication methods according to the various method embodiments described above.

In an exemplary embodiment of the present disclosure, a chip is also provided, which includes a programmable logic circuit and/or program instructions. When the chip runs on a communication device, the chip is used to perform the communication methods according to the various method embodiments described above.

In an exemplary embodiment of the present disclosure, a computer program product is also provided, which, when executed on a processor of a computer device, causes the computer device to perform the aforementioned communication method.

In an exemplary embodiment of the present disclosure, a computer program is also provided, which includes computer instructions. The computer instructions, when executed by a processor of a computer device, cause the computer device to perform the aforementioned communication method.

Those skilled in the art can understand that all or part of the processes for implementing the above embodiments can be accomplished through hardware, or by instructing relevant hardware through a program. The program can be stored in a computer-readable storage medium, and the aforementioned storage medium can be a read-only memory, a magnetic disk, an optical disk, or the like.

Described above are merely optional embodiments of the present disclosure and are not intended to limit the present disclosure. Any modifications, equivalent substitutions, improvements, or the like, made within the concept and principle of the present disclosure should fall within the protection scope of the present disclosure.

## Claims

1. A communication method, performed by a terminal device, the method comprising:
receiving first information, wherein the first information is used to instruct the terminal device to perform inventory operation related to an ambient power enabled Internet of Things (A-IoT) device, and/or the first information carries inventory operation information related to the A-IoT device.

2. The method according to claim 1, wherein the first information is generated based on at least one of second information, an operation attribute of the inventory operation, or third information;
wherein the second information is associated with the inventory operation, and the third information is associated with the terminal device.

3. The method according to claim 2, wherein the second information carries a first identifier, wherein the first identifier comprises: an area identifier corresponding to the inventory operation, and/or a terminal device identifier corresponding to the inventory operation.

4. The method according to claim 1 or 2, further comprising:
receiving third information, wherein the third information is associated with the terminal device.

5. The method according to claim 4, wherein the third information comprises at least one of: whether the terminal device is allowed to perform inventory operation, whether the terminal device is authorized to perform inventory operation, an inventory area allowed for the terminal device, inventory time allowed for the terminal device, inventory operation allowed for the terminal device, an inventory area authorized for the terminal device, inventory time authorized for the terminal device, inventory operation authorized for the terminal device, an inventory area supported by the terminal device, inventory time supported by the terminal device, or inventory operation supported by the terminal device.

6. The method according to claim 2, 3, or 4, wherein the first information is generated by a first network element; the second information is transmitted to the first network element by a second network element, and/or the third information is transmitted to the first network element by a third network element.

7. The method according to claim 6, wherein the second network element comprises an application function (AF) or a network exposure function (NEF).

8. The method according to claim 6, wherein the third network element comprises a unified data management (UDM) or a policy control function (PCF).

9. The method according to claim 6, wherein the third network element comprises a UDM, and the third information is carried in a subscription data acquisition response.

10. The method according to claim 8, wherein the third network element comprises the PCF, and the third information is carried in an inventory operation authorization response.

11. The method according to any one of claims 6 to 10, wherein the first network element comprises an access and mobility management function (AMF).

12. The method according to any one of claims 1 to 11, wherein an operation attribute of the inventory operation comprises at least one of: an operation provider of the inventory operation, an operation identifier of the inventory operation, or an application identifier of the inventory operation.

13. The method according to any one of claims 1 to 12, wherein an operation attribute of the inventory operation is identified by at least one of: a service identifier, single-network slice selection assistance information (S-NSSAI), a data network name (DNN), or an application identifier.

14. The method according to any one of claims 1 to 13, wherein the inventory operation information comprises one or more of the following information:
a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, or a terminal device identifier corresponding to the inventory operation.

15. The method according to any one of claims 1 to 14, further comprising:
determining whether to perform the inventory operation related to the A-IoT device based on the first information.

16. The method according to claim 15, further comprising:
performing the inventory operation related to the A-IoT device in a case where the first information is used to instruct the terminal device to perform the inventory operation related to the A-IoT device.

17. The method according to claim 15 or 16, wherein the method further comprises:
in a case where the first information carries the inventory operation information related to the A-IoT device, and third information is at least partially identical to the inventory operation information, performing the inventory operation related to the A-IoT device based on the at least partially identical information; or
in a case where the first information carries the inventory operation information related to the A-IoT device, and no identical information is present between the third information and the inventory operation information, refraining from performing the inventory operation related to the A-IoT device.

18. The method according to any one of claims 1 to 17, wherein the first information is carried by at least one of:
a non-access stratum (NAS) message, an access stratum (AS) message, or a paging message.

19. A communication method, performed by a network device, the method comprising:
transmitting first information to a terminal device, wherein the first information is used to instruct the terminal device to perform inventory operation related to an ambient power enabled Internet of Things (A-IoT) device, and/or the first information carries inventory operation information related to the A-IoT device.

20. The method according to claim 19, wherein the first information is generated based on at least one of second information, an operation attribute of the inventory operation, or third information;
wherein the second information is associated with the inventory operation, and the third information is associated with the terminal device.

21. The method according to claim 20, wherein the second information carries a first identifier, wherein the first identifier comprises: an area identifier corresponding to the inventory operation, and/or a terminal device identifier corresponding to the inventory operation.

22. The method according to claim 19 or 20, further comprising:
transmitting third information to the terminal device, wherein the third information is associated with the terminal device.

23. The method according to claim 22, wherein the third information comprises at least one of: whether the terminal device is allowed to perform inventory operation, whether the terminal device is authorized to perform inventory operation, an inventory area allowed for the terminal device, inventory time allowed for the terminal device, inventory operation allowed for the terminal device, an inventory area authorized for the terminal device, inventory time authorized for the terminal device, inventory operation authorized for the terminal device, an inventory area supported by the terminal device, inventory time supported by the terminal device, or inventory operation supported by the terminal device.

24. The method according to claim 20, 21, or 23, wherein the first information is generated by a first network element; the second information is transmitted to the first network element by a second network element, and/or the third information is transmitted to the first network element by a third network element.

25. The method according to claim 24, wherein the second network element comprises an AF or an NEF.

26. The method according to claim 24, wherein the third network element comprises a UDM or a PCF.

27. The method according to claim 26, wherein the third network element comprises the UDM, and the third information is carried in a subscription data acquisition response.

28. The method according to claim 27, wherein the third network element comprises the PCF, and the third information is carried in an inventory operation authorization response.

29. The method according to any one of claims 24 to 28, wherein the first network element comprises an AMF.

30. The method according to any one of claims 19 to 29, wherein the operation attribute of the inventory operation comprises at least one of: an operation provider of the inventory operation, an operation identifier of the inventory operation, or an application identifier of the inventory operation.

31. The method according to any one of claims 19 to 30, wherein the operation attribute of the inventory operation is identified by at least one of: a service identifier, single-network slice selection assistance information (S-NSSAI), a data network name (DNN), or an application identifier.

32. The method according to any one of claims 19 to 31, wherein the inventory operation information comprises one or more of the following information: a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, or a terminal device identifier corresponding to the inventory operation.

33. The method according to any one of claims 19 to 32, further comprising: receiving the first information from a first network element.

34. The method according to any one of claims 19 to 32, wherein the first information is carried by at least one of:
an non-access stratum (NAS) message, an access stratum (AS) message, or a paging message.

35. A communication method, performed by a first network element, the method comprising:
transmitting first information to a terminal device, wherein the first information is used to instruct the terminal device to perform inventory operation related to an ambient power enabled Internet of Things (A-IoT) device, and/or the first information carries inventory operation information related to the A-IoT device.

36. The method according to claim 35, wherein transmitting the first information to the terminal device comprises:
transmitting the first information to a network device, and the first information is transmitted to the terminal device by the network device.

37. The method according to claim 35 or 36, wherein the first information is generated based on at least one of second information, an operation attribute of the inventory operation, or third information;
wherein the second information is associated with the inventory operation, and the third information is associated with the terminal device.

38. The method according to claim 37, wherein the second information carries a first identifier, wherein the first identifier comprises: an area identifier corresponding to the inventory operation, and/or a terminal device identifier corresponding to the inventory operation.

39. The method according to claim 37, wherein the third information comprises at least one of: whether the terminal device is allowed to perform inventory operation, whether the terminal device is authorized to perform inventory operation, an inventory area allowed for the terminal device, inventory time allowed for the terminal device, inventory operation allowed for the terminal device, an inventory area authorized for the terminal device, inventory time authorized for the terminal device, inventory operation authorized for the terminal device, an inventory area supported by the terminal device, inventory time supported by the terminal device, or inventory operation supported by the terminal device.

40. The method according to any one of claims 35 to 39, further comprising at least one of:
receiving second information from a second network element;
receiving third information from a third network element;
transmitting third information to a terminal device; or
generating the first information.

41. The method according to claim 40, wherein the second network element comprises an AF or an NEF.

42. The method according to claim 40, wherein the third network element comprises a UDM or a PCF.

43. The method according to claim 42, wherein the third network element comprises the UDM, and the third information is carried in a subscription data acquisition response.

44. The method according to claim 43, further comprising: transmitting a subscription data acquisition request to the third network element.

45. The method according to claim 42, wherein the third network element comprises the PCF, and the third information is carried in an inventory operation authorization response.

46. The method according to claim 45, further comprising: transmitting an inventory operation authorization request to the third network element.

47. The method according to any one of claims 35 to 46, wherein an operation attribute of the inventory operation comprises at least one of: an operation provider of the inventory operation, an operation identifier of the inventory operation, or an application identifier of the inventory operation.

48. The method according to any one of claims 35 to 47, wherein the operation attribute of the inventory operation is identified by at least one of: a service identifier, single-network slice selection assistance information (S-NSSAI), a data network name (DNN), or an application identifier.

49. The method according to any one of claims 35 to 48, wherein the inventory operation information comprises one or more of the following information: a service identifier corresponding to the inventory operation, S-NSSAI corresponding to the inventory operation, a DNN corresponding to the inventory operation, an application identifier corresponding to the inventory operation, an area identifier corresponding to the inventory operation, a time period corresponding to the inventory operation, or a terminal device identifier corresponding to the inventory operation.

50. The method according to any one of claims 35 to 49, wherein the first network element comprises an AMF.

51. A communication apparatus, comprising:
a receiving module, configured to receive first information, wherein the first information is used to instruct the apparatus to perform inventory operation related to an ambient power enabled Internet of Things (A-IoT) device, and/or the first information carries inventory operation information related to the A-IoT device.

52. A communication apparatus, comprising:
a transmitting module, configured to transmit first information to a terminal device, wherein the first information is used to instruct the terminal device to perform inventory operation related to an ambient power enabled Internet of Things (A-IoT) device, and/or the first information carries inventory operation information related to the A-IoT device.

53. A communication apparatus, comprising:
a transmitting module, used for transmitting first information to a terminal device, wherein the first information is used to instruct the terminal device to perform inventory operation related to an ambient power enabled Internet of Things (A-IoT) device, and/or the first information carries inventory operation information related to the A-IoT device.

54. A terminal device, comprising: a processor; a transceiver connected to the processor; and a memory for storing executable instructions of the processor; wherein the processor is configured to load and execute the executable instructions to perform the communication method as defined in any one of claims 1 to 18.

55. A network device, comprising: a processor; a transceiver connected to the processor; and a memory for storing executable instructions of the processor; wherein the processor is configured to load and execute the executable instructions to perform the communication method as defined in any one of claims 19 to 34.

56. A communication device, comprising: a processor; a transceiver connected to the processor; a memory for storing executable instructions of the processor; wherein the processor is configured to load and execute the executable instructions to perform the communication method as defined in any one of claims 35 to 50.

57. A computer-readable storage medium, wherein executable instructions are stored in the readable storage medium, and the executable instructions are loaded and executed by a processor to implement the communication method as defined in any one of claims 1 to 18, or any one of claims 19 to 34, or any one of claims 35 to 50.

58. A chip, comprising a programmable logic circuit or program, wherein the chip is used to perform the communication method as defined in any one of claims 1 to 18, or any one of claims 19 to 34, or any one of claims 35 to 50.

59. A computer program product, comprising computer instructions stored in a computer-readable storage medium, wherein the computer instructions, when read by a processor of a computer device from the computer-readable storage medium and executed by the processor, cause the computer device to perform the communication method as defined in any one of claims 1 to 18, or any one of claims 19 to 34, or any one of claims 35 to 50.

60. A computer program, comprising computer instructions, which, when executed by a processor of a computer device, cause the computer device to perform a communication method as defined in any one of claims 1 to 18, or any one of claims 19 to 34, or any one of claims 35 to 50.
